# EUROPÄISCHE PATENTANMELDUNG

(11) **EP 2 354 689 A2**
(43) Veröffentlichungstag der Anmeldung: **10.08.2011**
(21) Anmeldenummer: 11001102.0
(22) Anmeldetag: 09.02.2011
(51) Int. Cl.: F24F 3/14, F24F 5/00

(54) **Absorptionwärmepumpe mit Peltier-Elementen und deren Verwendung**

(30) Priorität: 09.02.2010 DE 102010007345; 10.02.2010 DE 102010007033
(71) Anmelder: Immoplan Technische Gebäudeausstattung, 76530 Baden-Baden (DE)
(72) Erfinder: Müller, Thomas, 01129 Dresden (DE); Seith, Bernd, 76351 Linkenheim-Hochstetten (DE)
(74) Vertreter: Sieckmann, Ralf

(57) **Zusammenfassung**

Offenbart wird eine Wärmepumpe, enthaltend rekuperativ angeordnete, gut wärmeleitfähige Hohlkörper, die von einer wässrigen Kaliumcarbonat-Lösung durchströmt sind, wobei die Wärmepumpe mindestens 2 Peltier-Elemente 7 aufweist sowie die Verwendung dieser Wärmepumpe.

## Beschreibung

Die vorliegende Erfindung betrifft eine Wärmepumpe mit Peltier-Elementen mit wässriger Kaliumcarbonat-Lösung und deren Verwendung. Diese kann zur Luftreinhaltung, Wärmeübertragung, Wärmespeicherung, Feuchteregulierung von Luft in Klima- oder Trocknungssystemen und Wärmerückgewinnungssystemen eingesetzt werden.

Diese Anwendung von wässrigen konzentrierten Kaliumcarbonatlösungen zur
- Feuchteregulierung,
- Temperaturregulierung,
- Entstaubung,
- Sorption unerwünschter chemischer Bestandteile,
- Wärmerückgewinnung,
- Umwandlung von Latentwärme in physikalische Wärme und umgekehrt,
- Pufferung von Energie und Stoffen,
- Hygienisierung ,
-
von Raumluft oder bei Trocknungsprozessen ist in Verbindung mit großen wirksamen Oberflächen eine sehr effektive Möglichkeit des Stoff- und Energieaustausches.

Durch den Einsatz von Wärmepumpen kann die energetische, ökonomische und ökologische Effizienz solcher Systeme erheblich gesteigert werden.

Wird eine Vielzahl von Wärmepumpen parallel in Rekuperatoren angeordnet, so kann die Gesamtarbeitszahl des Wärmepumpensystems mit zunehmender Anzahl der Wärmepumpen erhöht werden. Die Seite der Wärmepumpe, zu der die Wärme hin gepumpt wird, wird im Folgenden als "warme" Seite bezeichnet, die Seite die als Wärmequelle dient wird als "kalte" Seite bezeichnet.

### Stand der Technik

Die Verwendung von wässrigen Salzlösungen in Klima- oder Trocknungssystemen zur Realisierung von Stoff- und Energietransport ist Stand der Technik. Besonders vorteilhaft sind hierbei Systeme, deren Wasserdampfpartialdruck bei Raumtemperatur einer optimalen Raumfeuchte (etwa 40-50% relative Luftfeuchte) entspricht. Solche Systeme werden z.B. in der DE 43 44 099 A1 beschrieben. Diese Systeme stellen eine hygienische Alternative zum Wärmeaustausch über feste, meist metallische Oberflächen dar, auf denen Bakterien siedeln können. Diese Vorteile sind in der DE 196 46 263 C2 beschrieben.

Sorptionsspeichersysteme nutzen die Abwärme in Niedertemperatur zur Regeneration der Salzlösungen, siehe auch DE199 52 639.

Die Möglichkeiten des Stoff- und Energieaustausches kann wesentlich erweitert werden, indem Wärmepumpen eingesetzt werden. Dem Stand der Technik nach werden diese in Sorptionen einstufig oder in geringer Stufenanzahl angesetzt.

Die Anzahl der Stufen ist beim Einsatz von Kompressor-Wärmepumpen durch die Begrenzung der Miniaturisierung der einzelnen Wärmepumpenstufen und deren Anschaffungspreis ökonomisch limitiert. Die Vorteile des Einsatzes parallel in Rekuperatoren angeordneter Kompressor-Wärmepumpen werden in der DE 30 12 670 A1 ausführlich erläutert.

### Nachteile des Standes der Technik

Als Wärmeübertragerflüssigkeit werden in der Regel Gemische von Salzlösungen und ggf. organische Komponenten gewählt. Sind die Salzlösungen Halogenide, stellt die sich daraus ergebende Korrosion an Metallen hohe Anforderungen an die zu verwendenden Werkstoffe. Das Problem der Auskristallisation bei zu starker Temperaturabhängigkeit der Löslichkeit der Salze kann bei falscher Salzauswahl zu Verstopfungen oder anderen Betriebsstörungen führen.

Der Einsatz einer Vielzahl von Kompressor-Wärmepumpen in Rekuperatoren zum Ein-und Ausschleusen von Energie aus dem System und zur Ausnutzung von temperaturabhängigen Stoffaustauschvorgängen (Absorption, Desorption) stößt aus o.g. Gründen an ökonomische Grenzen. Dadurch kann der Vorteil der Verringerung der Temperaturdifferenz und die damit einhergehende Erhöhung der Arbeitszahl des Wärmepumpensystems durch die ökonomisch begrenzte Anzahl der Kompressor-Wärmepumpen im Gegensatz zu den Peltier-Wärmepumpen nicht ausgespielt werden.

### Aufgabe der Erfindung

Aufgabe der Erfindung ist es, die ökonomischen Barrieren der realisierbaren Stufenzahl von Wärmepumpen zu verringern und durch Einsatz einer abgestimmten Salzlösung ein optimales System für Stoff- und Wärmetransporte für Gebäudeklimatisierungen, Trocknungsprozesse, Luftreinigung etc. zur Verfügung zu stellen. Insbesondere soll eine Wärmepumpe enthaltend rekuperativ angeordnete, gut wärmeleitfähige Hohlkörper, die von einer wässrigen Kaliumcarbonat-Lösung durchströmt sind, bereitgestellt werden.

### Lösung der Aufgabe

Die Aufgabe wird erfindungsgemäß dadurch gelöst, dass eine aus einer Vielzahl von parallel geschalteten Peltier-Elementen aufgebaute Wärmepumpe, in Form eines Gegenstromwärmetauschers, die Salzlösungen als Wärmereservoirs nutzt. Die an den Peltier-Elementen (direkt oder an einer gut wärmeleitfähigen, wärmeleitend mit dem Peltier-Element verbundenen Trennwand) vorbeiströmenden Salzlösungen sorgen auf Grund ihrer guten Wärmeleitfähigkeit für einen zügigen Wärme Ab- oder Zutransport vom oder zum Peltier-Element. Dadurch kann der Temperaturgradient an der Peltieroberfläche gering gehalten werden. Die Peltier-Elemente können nur mit einem Bruchteil ihrer für Kälteanwendungen angegebenen Nennleistung betrieben werden, um einen guten Wirkungsgrad als Wärmepumpe zu erzielen. Als Salzlösung kommt eine gesättigte Kaliumkarbonatlösung zum Einsatz, wobei es sinnvoll ist, im Vorratsbehälter kristallines Kaliumkarbonat als Bodenkörper vorzuhalten, so dass die Lösung stets gesättigt ist, so lange ein Bodenkörper vorhanden ist. Der durch Absorption überschüssiger Luftfeuchte entstehende Volumenzuwachs an Lösung wird z.B. über einen Überlauf oder eine elektronisch geregelte Pumpe abgeführt. Zur Vergrößerung der Grenzfläche zwischen Lösung und Luft werden bei Klimaanwendungen Apparate wie Gaswäscher (Füllkörperkolonnen) o.ä.verwendet.

Die Erfindung betrifft so eine Wärmepumpe, enthaltend rekuperativ angeordnete, gut wärmeleitfähige Hohlkörper, die von einer wässrigen Kaliumcarbonat-Lösung durchströmt sind, wobei die Wärmepumpe mindestens 2 Peltier-Elemente 7 aufweist.

### Vorteil der Erfindung

Die Verwendung von Peltier-Elementen und der geringe Preis je Element ermöglichen eine viel höhere Anzahl von parallel geschalteten Stufen, als das mit Kompressor-Wärmepumpen ökonomisch realisierbar wäre. Peltier-Elemente sind im Handel erhältlich, beispielsweise bei der Conrad Electronics SE, Wernberg, oder deren Ladenlokalen. Dadurch verbessert sich der Wirkungsgrad, in dem die jeweilige, durch die Wärmepumpe zu überwindende Temperaturdifferenz mit zunehmender Zahl der Stufen geringer wird. Wie bei jeder anderen Wärmepumpe ist die Arbeitszahl (Quotient aus gepumpter Wärme und aufgewendeter elektrische Arbeit) beim Peltier-Element wesentlich von der zu überwinden Temperaturdifferenz bestimmt. Für gegen Null gehende Temperaturdifferenzen geht der Grenzwert der Arbeitszahl der Wärmepumpe gegen unendlich. Weiterhin arbeiten Peltier-Elemente geräuschlos, sind sehr gut und analog über die Spannung regelbar und haben wenig Verschleiß. (Durch Teilchendiffusion im Halbleitergitter tritt eine geringfügige Alterung auf). Die Peltier-Elemente sind während ihrer Lebensdauer wartungsfrei.

Die Ein- und Auskopplung der Energie erfolgt direkt in die Raumluft bzw. in die Zuluft oder aus der Abluft, wobei alle bekannten Vorteile des Stoff- und Energietransports an der Grenzfläche Salzlösung / Luft zum Tragen kommen. Die Kaliumkarbonatlösung dient dabei als Kurzzeit-Wärmespeicher.

Die Regenration der Kaliumcarbonatlösung erfolgt bevorzugt unter Nutzung von Abwärme, die Lösung bzw. das regenerierte Salz stellen somit Wärmespeicher dar.

So kann Wärme auch transportwürdig gespeichert werden.

### Beschreibung der Erfindung

Durch die Anwendung des Kaliumcarbonates kommt unser System zu folgenden Eigenschaften:
- Die Gleichgewichtsfeuchte der gesättigten Kaliumcarbonat-Lösung beträgt ca. 43 % rel. Luftfeuchte über einen weiten Temperaturbereich (den für Gebäudetemperaturen entscheidenden). Diese Feuchte befindet sich im optimalen Raumklima-Fenster.

- Kaliumcarbonat reagiert in wässriger Lösung in Folge Hydrolyse basisch, nimmt also saure oder säurebildende Bestandteile der Raumluft oder der Trocknungsbrüden unter Salzbildung auf.
- Die Löslichkeit ist sehr hoch und über einen weiten Temperaturbereich wenig veränderlich. Durch die hohe Löslichkeit ist ein hohes Pufferpotential für Chemiesorption gegeben.
- Die Wärmeleitfähigkeit von Kaliumcarbonat ist bei 20°C mit 0,58 W/(m*k) so gut wie die von Wasser (0,56 W/(m*k)).
- Kaliumcarbonat-Lösung ist nicht korrosiv gegen viele Materialien, wie z.B. Edelstahl.
- Kaliumcarbonat ist nicht toxisch, als E 501 dient es als Lebensmittelzusatz.
- In Kaliumcarbonat-Lösung können keine Keime überleben, der hohe osmotische Druck gegenüber lebenden Zellen und der hohe pH-Wert zerstören Zellen. Dadurch bleibt die Lösung hygienisch und an der Grenzfläche aus der Luft abgeschiedene Keime werden vernichtet, so dass die Keimzahl der Luft reduziert werden kann.
- Kaliumcarbonat- Lösung nimmt bei Raumtemperatur CO₂ aus der Luft auf, durch Bildung von Hydrogenkarbonat. Durch Erwärmung der Lösung auf über 60 °C zerfällt das Hydrogenkarbonat, so dass das CO₂ wieder aus der Lösung freigesetzt wird und der Puffer wieder erneuert ist. Das freigesetzte CO₂ wird dann abgeleitet oder kann für weitere technische Zwecke benutzt werden.
- Die Frostbeständigkeit der Anlage ist durch die Kaliumcarbonat- Lösung bis unter -25 °C gewährleistet.

Das System kann neben den Peltier-Elementen mindestens folgende Hauptkomponenten aufweisen:
1. Gaswäscher (15-17), welche eine große Grenzfläche zwischen KaliumkarbonatLösung und Luft (oder Brüden bei Trocknungsprozessen) darbieten. Bevorzugt sind das Füllkörperkolonnen.
2. Pumpen, welche die Flüssigkeit umwälzen. Bevorzugt sind das steuerbare Pumpen, besonders bevorzugt Magnetkolbenpumpen.
3. Eine Wärmepumpe in Form eines Gegenstromwärmetauschers, bestehend aus zwei von der Salzlösung durchströmten Hohlkörpern (8, 9), bevorzugt aus metallischen Werkstoffen wie .Z.B. Stahl, Edelstahl, Kupfer oder aus Kunststoffen, deren Wärmeleitfähigkeit durch Zusätze erhöht wurde, besonders bevorzugt Kunststoffe, die durch den Zusatz von Kohlenstoff (Graphit) gut wärmeleitfähig sind, sowie mindestens 2 Peltier-Elementen (7), welche entweder direkt in die Hohlkörper hineinragen, so dass deren (meist keramische) Oberfläche direkt mit der Salzlösung in Kontakt steht oder die wärmeleitende glatte Oberfläche mittels Wärmeleitpaste oder Wärmeleitfolie mit den Hohlkörpern verbunden ist. Die Hohlkörper sind so angeordnet, dass diese einen hinreichenden Anpressdruck auf die Peltier-Elemente ausüben. Das Gehäuse oder Gestell, welches die Hohlkörper und die Peltier-Elemente aufnimmt, ist so gestaltet, dass es keine Wärmebrücke darstellt.
4. Einen Vorratsbehälter, der Kaliumkarbonat und seine gesättigte, wässrige Lösung (2) aufnimmt, wobei stets ein Bodenkörper (1) aus sedimentiertem Kaliumkarbonat vorhanden ist, um die Sättigung zu gewährleisten. Weiterhin ist dieser Behälter über einen Überlauf (3) oder eine andere Vorrichtung mit dem Behälter (4) verbunden, welcher den Überschuss an Lösung, der durch Aufnahme von Luftfeuchtigkeit oder Brüden zu Stande kommt, aufnimmt.
5. Ventile (10, 12), welche die Umschaltung von Heizen auf Kühlen durch Umleitung des Flüssigkeitsstromes ermöglichen, bevorzugt sind dabei Ventile mit elektrischen Stellmotoren oder Magnetventile.
6. Eine Regelung, bevorzugt eine elektronische Regelung, besonders bevorzugt eine auf Mikrocontrollern oder anderen Kleincomputern basierende Regelung.
7. Rohrleitungen für die Salzlösung, bevorzugt aus Kunststoff, besonders bevorzugt aus Polyethylen, sowie Kanälen zur Luftführung, bevorzugt aus Kunststoffen, welche eine äußerliche Wärmedämmung besitzen (z.B. geschlossenporige Schaumstoffe).

Funktionsweise der Komponenten:
Die Gaswäscher haben jeweils folgende Funktionen bei der Gebäudeklimatisierung: Frischluft- Gaswäscher (17) dient zur Erwärmung / Kühlung der Frischluft, sowie zur Befeuchtung oder Entfeuchtung bis zur Gleichgewichtsfeuchte (43 % rel. Feuchte bei 20°C). Gleichzeitig wird Staub, Pollen, saure Luftverunreinigungen, Keime etc. aus der Luft abgereichert. Der Energieaustausch kann in beide Richtungen erfolgen, entweder Kühlen oder Heizen. Der Abluft-Wäscher (16) dient in erster Linie der Rückhaltung von physikalischer und latenter Wärme (im Heizungsfall) oder der Abgabe von physikalischer und latenter Wärme im Fall der Kühlung. Gleichzeitig wird Wasser je nach Bedarf vom System zurückgehalten oder an die Umgebung abgegeben. Abluft-Wäscher und Frischluft -Wäscher stellen die Energie- und Stoffaustauschkomponenten des Wärmerückgewinnungssystems dar, wobei die Wärme nicht nur quantitativ zurück gehalten werden kann, sondern auch Wärme in das System von außen eingekoppelt oder nach außen ausgekoppelt werden kann.

Umluftwäscher (15) sorgen dafür, dass die Luftfeuchte im Gebäude annähernd an der Gleichgewichtsfeuchte der Kaliumcarbonat-Lösung (ca. 43% rel. Luftfeuchte) über einen weiten Temperaturbereich gehalten wird. Die von Menschen und Tieren durch Atmung und Transpiration abgegebene Feuchte, welche ein weiteres Ansteigen der Luftfeuchte verursachen würde, wird durch Sorption gebunden und dabei wird gleichzeitig die darin enthaltene Latentwärme in physikalische Wärme umgewandelt, indem sich die Lösung erwärmt. Gleiches gilt für Wasserdampf, der durch Kochen, Duschen etc. frei gesetzt wird. Die Kaliumcarbonat-Lösung stellt einerseits einen Kurzzeit-Wärmepuffer dar, in dem die beim Energieaustausch mit der Luft oder in der Wärmepumpe aufgenommene Wärme zwischengespeichert wird. Weiterhin stellt die KK-Lösung einen Wärmepuffer dar, dessen Kapazität von der Masse der bevorrateten Lösung abhängig ist und der einen Teil der Tag / Nacht-Temperaturschwankung puffern kann oder auch zur Moderation von Temperaturgefällen innerhalb (insbesondere hoher) Gebäude eingesetzt werden kann.

Die Möglichkeit zur Langzeit-Energiespeicherung ergibt sich aus der Möglichkeit, die Regeneration der Kaliumcarbonat-Lösung, also das Austreiben des Wassers mit Hilfe von Abwärme zu realisieren. So kann das Kaliumcarbonat als transportwürdiger Sorptionsspeicher genutzt werden. Die erfindungsgemäße Peltier-Wärmepumpe besteht aus einer Vielzahl von einzelnen Wärmepumpenstufen, so ist die jeweilige Temperaturdifferenz der gegenüberliegenden Flächen eines Peltier-Elements sehr gering, wodurch die Arbeitszahl des Wärmepumpensystems wesentlich höher ist, als wenn man einstufig mit einer großen Temperaturdifferenz verfahren würde. Die Peltier-Wärmepumpe wird durch Anlegen einer Spannung in Betrieb gesetzt. Die Höhe der Spannung beeinflusst die Stärke des fließenden Stroms, welcher als Triebkraft für den Peltier-Effekt zum Tragen kommt. Dieser Effekt bewirkt einen gerichteten Wärmetransport durch das Peltier-Element senkrecht zu dessen Oberfläche. Die Richtung des Wärmetransports wird durch die Polung des Elementes bestimmt. Bevorzugt wird die Wärmepumpe vertikal angeordnet, so dass sich Wärmeschichtungen auf Grund unterschiedlicher Dichte und der Schwerkraft aufbauen können.

Für die Regulierung der Spannung eignen sich Netzteile mit einer Schnittstelle zu einer Regelung (Bus-Systeme oder Analogschnittstelle).

Um den chemischen Puffer der Kaliumcarbonat-Lösung als CO₂ Speicher zu regenerieren, werden ebenfalls Peltier-Wärmepumpen nach dem gleichen Prinzip angewendet. Die Regenerierung des Puffers basiert auf dem thermisch induzierten Zerfall von Hydrogenkarbonat in wässriger Lösung bei Temperaturen über 60°C (bei Normaldruck).

2 HCO₃⁻ → CO₃ ²⁻+ CO₂ +H₂O Gleichung 1: Zerfall von Hydrogenkarbonat

Alternativ kann die Regeneration des CO₂-Puffers durch Abwärme in Verbindung mit der oben beschriebenen Regeneration des Feuchtepuffers (Austreiben des Wassers aus der Kaliumcarbonat-Lösung) erfolgen.

Nach einer bevorzugten Ausführungsform dienen die Peltier-Elemente als elektrisch angetriebene Wärmepumpe.

Nach einer weiteren bevorzugten Ausführungsform wird die Wärmepumpe zusammen mit wenigstens einer Kompressionswärmepumpe, einer Adsorptionswärmepumpe und / oder einer Absorptionswärmepumpe eingesetzt.

Nach einer weiteren bevorzugten Ausführungsform sind die Wärmepumpen parallel geschaltet und im Gegenstrom angeordnet.

Nach einer weiteren bevorzugten Ausführungsform ist die wässrige Kaliumcarbonat-Lösung eine gesättigte wässrige Kaliumcarbonat-Lösung.

Der vorliegenden Erfindung liegt weiter die Aufgabe zugrunde, neue Verwendungen für die Wärmepumpe zu schaffen.

Nach einer weiteren bevorzugten Ausführungsform betrifft dies die Verwendung der Wärmepumpe zur Wärmerückgewinnung, insbesondere zur Rückgewinnung von Latentwärme.

Nach einer weiteren bevorzugten Ausführungsform betrifft dies die Verwendung der Wärmepumpe zu Trocknungsprozessen und zur Entfeuchtung von Raumluft.

Nach einer weiteren bevorzugten Ausführungsform betrifft dies die Verwendung der Wärmepumpe bei Anreicherungsprozessen, insbesondere bei der Erhöhung von Solekonzentrationen.

Nach einer weiteren bevorzugten Ausführungsform betrifft dies die Verwendung der Wärmepumpe zur Klimatisierung, insbesondere zur Klimatisierung von Gebäudeluft.

Der vorliegenden Erfindung liegt weiter die Aufgabe zugrunde, neue Verwendungen für die gesättigte wässrige Kaliumcarbonat-Lösung zu schaffen.

Nach einer weiteren bevorzugten Ausführungsform betrifft dies die Verwendung der Kaliumcarbonat-Lösung zum gekoppelten Stoff- und Energietransport, insbesondere bei der Klimatisierung von Gebäudeluft und bei Trocknungsvorgängen und anderen Vorgängen, bei denen Wärmerückgewinnung, insbesondere die Rückgewinnung von Latentwärme, stattfindet

Nach einer weiteren bevorzugten Ausführungsform betrifft dies die Verwendung der Wärmepumpe zur Chemisorption von Luftbestandteilen, insbesondere Kohlendioxid und Säurebildnern.

Die vorliegende Erfindung wird nunmehr durch Ausführungsbeispiele näher erläutert.

Es zeigen:
Figur 1 eine Gebäudeklimatisierung im Heizbetrieb
Figur 2 eine Gebäudeklimatisierung im Kühlbetrieb
Figur 3 einen Regenerator für Kaliumcarbonat-Lösung

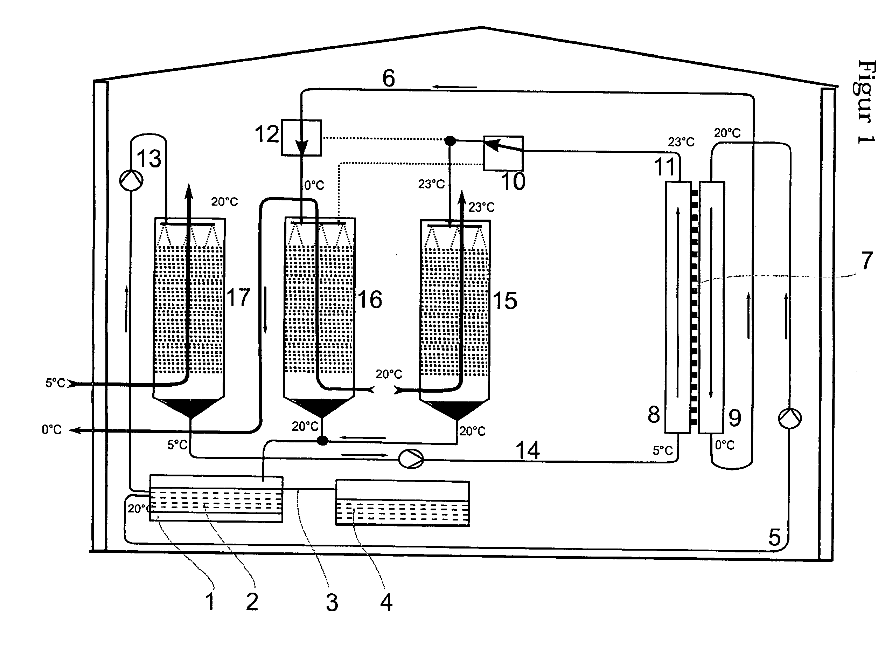

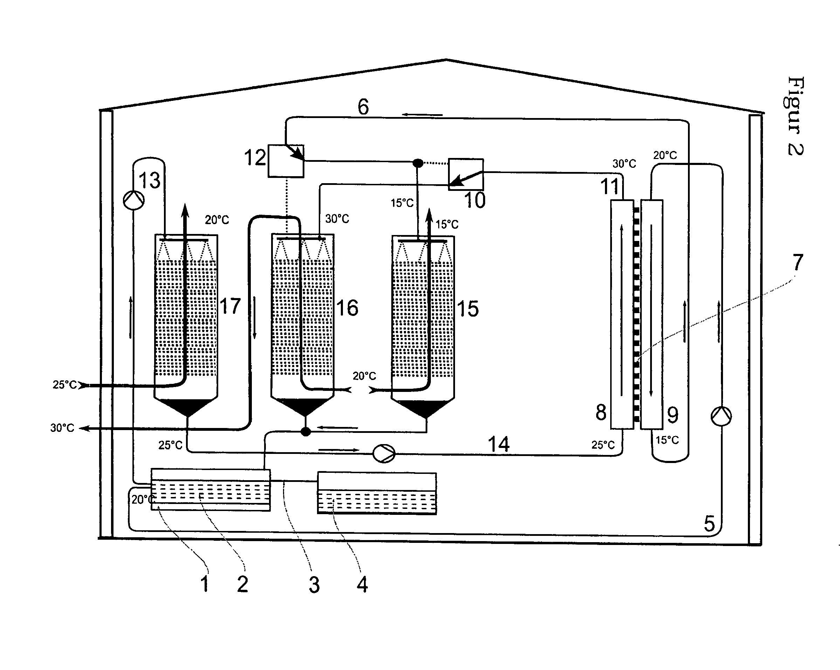

Bezugszeichenliste zu Figur 1 und Figur 2 (hier bezeichnet KK = Kaliumcarbonat)

| If Nr. | | Bezeichnung |
|---|---|---|
| 1 | - | Bodenkörper aus kristallinem Kaliumkarbonat |
| 2 | - | gesättigte KK-Lösung |
| 3 | - | Überlauf für Volumenüberschuss |
| 4 | - | Lagerbehälter für verbrauchte KK-Lösung |
| 5 | - | Zuleitung zur "kalten" Seite der Wärmepumpe mit Pumpe |
| 6 | - | abgehende Leitung vonder "kalten" Seite der Wärmepumpe |
| 7 | - | Peltier-Elemente |
| 8 | - | von KK-Lösung durchströmter, wärmeleitfähiger Hohlkörper auf der "warmen" Seite |
| | | der Wärmepumpe |
| 9 | - | von KK-Lösung durchströmter, wärmeleitfähiger Hohlkörper auf der "kalten" Seite der |
| | | Wärmepumpe |
| 10 | - | 1. Umschaltventil Heizen / Kühlen |
| 11 | - | abgehende Leitung von der "warmen" Seite der Wärmepumpe |
| 12 | - | 2. Umschaltventil Heizen / Kühlen |
| 13 | - | Zuleitung Frischluft-Wäscher mit Pumpe |
| 14 | - | Zuleitung zur "warmen" Seite der Wärmepumpe mit Pumpe, von Frischluftwäscher |
| | | kommend |
| 15 | - | Umluft-Wäscher (Füllkörperkolonne) |
| 16 | - | Abluft-Wäscher (Füllkörperkolonne) |

### Ausführungsbeispiel 1

### Gebäudeklimatisierung im Heizbetrieb (Figur 1)

Im Abluft -Wäscher (16) wird die Wärme (latente und physikalische) enthaltende Raumluft, - hier im Beispiel mit einer Temperatur von 20°C - im Gegenstrom mit Kaliumcarbonat-Lösung in Kontakt gebracht. Dabei gibt die Luft ihre Wärmeenergie und einen Teil ihres Wassergehaltes (bis ca. 43 % relativer Luftfeuchte bei der Endtemperatur- hier im Beispiel 0°C) ab.

Im Gegenzug erwärmt sich die Kaliumcarbonat-Lösung auf ca. 20 °C, bzw. bei hohen Luftfeuchten noch stärker, da Latentwärme durch den Phasenübergang des Wassers zu physikalischer Wärme umgewandelt wird. Um die Wärme der Luft aufnehmen zu können ist, nur ein Bruchteil des Volumens, nämlich ca. 1/4 Liter Kaliumcarbonat-Lösung je m3 Raumluft erforderlich. Die Steuerung des Massenstroms der Kaliumcarbonat-Lösung erfolgt durch regelbare Pumpen, hier im Beispiel durch die Pumpe in Leitung 5. Als Regelgröße dient hier die Endtemperatur der Kaliumcarbonat-Lösung am Auslauf des Wäschers. Die so erwärmte Kaliumcarbonat-Lösung fließt dem Vorratsbehälter zu, welche die Kaliumcarbonat-Lösung (2) und den Bodenkörper (1) bevorratet.

Aus diesem Vorrat, der als Pufferspeicher dient, wird die "kalte" Seite der Wärmepumpe gespeist. Der Kaliumcarbonat-Lösung im Hohlkörper (9) wird durch die Peltier-Elemente Wärme entzogen, die auf die "warme" Seite (8) der Wärmepumpe transportiert wird. Durch den Entzug von Energie kühlt sich die Kaliumcarbonat-Lösung ab (hier 0°C), so dass diese wieder zur Aufnahme von Wärme im Abluft-Wäscher befähigt ist.

Die auf der "warmen" Seite der Wärmepumpe bereit gestellte erwärmte Lösung (hier 23°C) gibt ihre Wärme bis zum Erreichen der Raumtemperatur im Umlauf-Wäscher (15) an die Raumluft ab. Dabei nimmt die Kaliumcarbonat-Lösung auch überschüssige Luftfeuchte (>43% rel. Feuchte) auf oder gibt bei zu trockener Luft Wasser ab. Um ausreichende Heizleistung zu erzielen, muss die Luft hinreichend oft durch den Umlauf-Wäscher geleitet werden, da die Temperaturdifferenz für die Erwärmung wegen der absoluten Luftfeuchte und der energetischen Effizienz gering gehalten werden muss. Die Frischluftkolonne (17), deren Hauptaufgabe die. Temperatur- und Feuchteregulierung der Frischluft ist, erwärmt die einströmende Frischluft durch den im Gegenstrom stattfindenden Kontakt mit Kaliumcarbonat-Lösung (hier mit einer Temperatur von 20°C ), die aus dem Vorratsbehälter stammt. Die dadurch abgekühlte Kaliumcarbonat-Lösung (hier im Beispiel auf 5°C) fließt dann, - angetrieben durch die Pumpe in Leitung 14 - der "warmen" Seite (8) der Wärmepumpe zu.

Die Ventile (10) und (12), welche zum Zwecke der Automatisierung des Systems durch elektrische Stellantriebe betätigt werden können, sorgen für eine Umschaltung vom Heizbetrieb auf Kühlbetrieb.

### Ausführungsbeispiel 2

### Gebäudeklimatisierung im Kühlbetrieb (Figur 2)

Im Abluft-Wäscher (16) wird die Raumluft, - hier im Beispiel mit einer Temperatur von 20°C - im Gegenstrom mit Kaliumcarbonat-Lösung in Kontakt gebracht. Dabei nimmt die Luft Wärmeenergie und Wasser auf (bis ca. 43 % relativer Luftfeuchte, bei der Endtemperatur- hier im Beispiel 30°C). Insbesondere durch die Aufnahme von Wasser wird so Energie in die Abluft eingetragen. Die Abluft wird dann in die Umgebung abgegeben.

Im Gegenzug kühlt sich die Kaliumcarbonat-Lösung auf ca. 20 °C ab. Um die Wärme an die Luft abgeben zu können, ist wieder nur ein Bruchteil des Volumens, nämlich ca. 1/4 Liter Kaliumcarbonat-Lösung je m3 Raumluft erforderlich. Die Steuerung des Massenstroms der Kaliumcarbonat-Lösung erfolgt durch regelbare Pumpen, hier im Beispiel durch die Pumpe in Leitung 14.

Als Regelgröße dient hier die Endtemperatur der Kaliumcarbonat-Lösung am Auslauf des Wäschers. Die so abgekühlte Kaliumcarbonat-Lösung fließt dem Vorratsbehälter zu, welche die Kaliumcarbonat-Lösung (2) und den Bodenkörper (1) bevorratet.

Aus diesem Vorrat, der als Pufferspeicher dient, wird die "kalte" Seite der Wärmepumpe gespeist, indem der Kaliumcarbonat-Lösung im Hohlkörper (9) durch die Peltier-Elemente Wärme entzogen wird, welche auf die "warme" Seite (8) der Wärmepumpe transportiert wird. Durch den Entzug von Energie kühlt sich die Kaliumcarbonat-Lösung ab (hier auf 15°C) und wird dann im Umlauf-Wäscher genutzt, um die Raumtemperatur abzusenken.

Die auf der "warmen" Seite (8) der Wärmepumpe bereit gestellte erwärmte Lösung (hier 30°C) gibt ihre Wärme dann in der Abluftkolonne an die Abluft ab.

Die Frischluftkolonne (17), deren Hauptaufgabe die Temperatur- und Feuchteregulierung der Frischluft ist, kühlt die einströmende Frischluft (hier 25°C) durch den im Gegenstrom stattfindenden Kontakt mit Kaliumcarbonat-Lösung (hier mit einer Temperatur von 20°C), welche aus dem Vorratsbehälter stammt. Die dadurch erwärmte Kaliumcarbonat-Lösung (hier im Beispiel auf 25°C) fließt dann, - angetrieben durch die Pumpe in Leitung 14 - der "warmen" Seite (8) der Wärmepumpe zu.

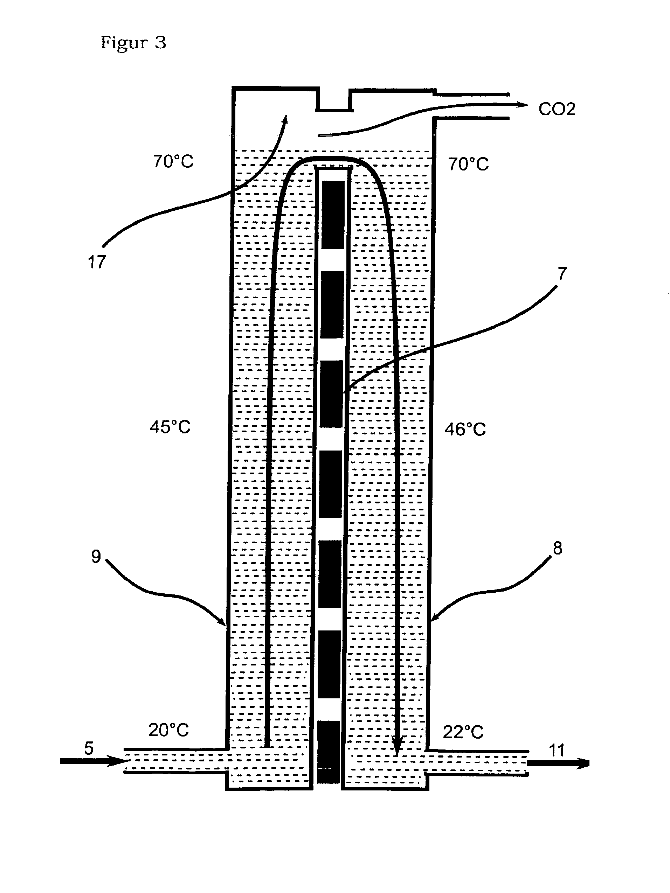

Bezugszeichenliste zu Figur 3 (hier bezeichnet KK = Kaliumcarbonat)

| Ifd. Nr. | Bezeichnung |
|---|---|
| 8 | von KK-Lösung durchströmter, wärmeleitfähiger Hohlkörper auf der |
| | "warmen" Seite der Wärmepumpe |
| 11 | abgehende Leitung für KK-Lösung von der "warmen" Seite der |
| | Wärmepumpe |
| 5 | Zuleitung von KK-Lösung zur "kalten Seite der Wärmepumpe |
| 9 | von KK-Lösung durchströmter, wärmeleitfähiger Hohlkörper auf der |
| | "kalten" Seite der Wärmepumpe |
| 17 | Gasraum für entstandenes CO₂ |
| 7 | Peltier-Elemente |

### Ausführungsbeispiel 3

### Regenerator für CO₂-Puffer der Kaliumcarbonat-Lösung (Figur 3)

Zur Regeneration des CO₂-Puffers der Kaliumcarbonat-Lösung genügt eine Erwärmung der Kaliumcarbonat-Lösung auf über 60°C auf der "warmen" Seite der Wärmepumpe (4), wodurch das Hydrogenkarbonat zerfällt (Gleichung 1), wobei sich CO₂ im Gasraum (5) sammelt, welches in die Umgebung abgeführt oder als Rohstoff verwendet wird. Da es zweckmäßig ist, die Lösung wieder abzukühlen, kann ein großer Teil der Energie die zum Erwärmen aufgewendet wurde, auf der "kalten" Seite der Wärmepumpe (1) wieder zurückgewonnen werden. Durch die rekuperative Anordnung der Apparatur werden die bereits beschriebenen Effekte einer Vielzahl parallel geschalteter Peltier-Wärmepumpen ausgenutzt.

## Patentansprüche

1. Wärmepumpe, enthaltend rekuperativ angeordnete, gut wärmeleitfähige Hohlkörper, die von einer wässrigen Kaliumcarbonat-Lösung durchströmt sind, **dadurch gekennzeichnet, dass** die Wärmepumpe mindestens 2 Peltier-Elemente (7) aufweist.

2. Wärmepumpe nach Anspruch 1, **dadurch gekennzeichnet, dass** die Peltier-Elemente (7) als elektrisch angetriebene Wärmepumpe dienen.

3. Wärmepumpe nach Anspruch 1 oder 2, **dadurch gekennzeichnet, dass** diese zusammen mit wenigstens einer Kompressionswärmepumpe, einer Adsorptionswärmepumpe und / oder einer Absorptionswärmepumpe eingesetzt wird.

4. Wärmepumpe nach irgendeinem der Ansprüche 1 bis 3, **dadurch gekennzeichnet, dass** die Wärmepumpen parallel geschaltet und im Gegenstrom angeordnet sind.

5. Wärmepumpe nach Anspruch 1, **dadurch gekennzeichn**e**t, dass** die wässrige Kaliumcarbonat-Lösung eine gesättigte wässrige Kaliumcarbonat-Lösung ist.

6. Verwendung der Wärmepumpe nach irgendeinem der Ansprüchen 1 bis 5 zur Wärmerückgewinnung, insbesondere zur Rückgewinnung von Latentwärme.

7. Verwendung der Wärmepumpe nach irgendeinem der Ansprüchen 1 bis 5 zu Trocknungsprozessen und zur Entfeuchtung von Raumluft.

8. Verwendung der Wärmepumpe nach irgendeinem der Ansprüchen 1 bis 5 bei Anreicherungsprozessen, insbesondere bei der Erhöhung von Solekonzentrationen.

9. Verwendung der Wärmepumpe nach irgendeinem der Ansprüchen 1 bis 5 zur Klimatisierung, insbesondere zur Klimatisierung von Gebäudeluft.

10. Verwendung einer gesättigten, wässrigen Kaliumcarbonat-Lösung gemäß Ansprüchen 1 oder 5 zum gekoppelten Stoff- und Energietransport, insbesondere bei der Klimatisierung von Gebäudeluft und bei Trocknungsvorgängen und anderen Vorgängen, bei denen Wärmerückgewinnung, insbesondere die Rückgewinnung von Latentwärme, stattfindet.

11. Verwendung einer gesättigten, wässrigen Kaliumcarbonat-Lösung gemäß Ansprüchen 1 oder 5 zur Chemisorption von Luftbestandteilen, insbesondere Kohlendioxid und Säurebildnern.
